# EUROPEAN PATENT APPLICATION

(11) **EP 0 908 228 A1**
(43) Date of publication of application: **14.04.1999**
(21) Application number: 97918349.8
(22) Date of filing: 01.05.1997
(51) Int. Cl.: B01J 13/00

(54) **PROCESS FOR THE PRODUCTION OF MINERAL GEL AND PROCESS FOR THE PRODUCTION OF MINERAL FINES**

(30) Priority: 01.05.1996 JP 134463/96
(71) Applicant: Adam Kozan Chuo Kenkyusho Co., Ltd., Ohmiya-shi, Saitama-ken 330 (JP); TOMEN CORPORATION, Ohsaka-shi, Ohsaka-fu 541 (JP)
(72) Inventor: MATSUNAGA Norihisa, A. Kozan Chuo Kenkyusho Co Ltd, Ohmiya-shi, Saitama-ken 330 (JP); NAKAJIMA Shingo, Adam Kozan Chuo Kenkyusho Co. Ltd, Ohmiya-shi, Saitama-ken 330 (JP); NOBE Katsuhide, Adam Kozan Chuo Kenkyusho Co. Ltd., Ohmiya-shi, Saitama-ken 330 (JP); OKAMOTO, Akio, Adam Kozan Chuo Kenkyusho Co. Ltd., Ohmiya-shi, Saitama-ken 330 (JP)
(74) Representative: VOSSIUS & PARTNER
(86) International application number: JP9701497
(87) International publication number: WO9740927

(57) **Abstract**

A method for preparing a mineral gel comprises the steps of immersing ore powder in an acidic water for at least 6 hours; then adding a gelling-stabilizing agent, a water release-inhibitory and stabilizing agent and a dispersant to the mixture to form a gel; and neutralizing the resulting gel. The method permits the preparation of a gel considerably easily as compared with the conventional mechanical pulverization method, while holding the characteristic properties peculiar to each raw ore.

## Description

### TECHNICAL FIELD

The present invention relates to a method for preparing a mineral gel and a method for preparing mineral fine powder.

### BACKGROUND ART

Ores each is provided with characteristic properties peculiar thereto. For instance, tourmaline which is a crystalline ore called Elbaite is basically a boron-containing silicate ore and it has been known that the tourmaline has electrical properties such as piezoelectricity and pyroelectricity properties. It has recently been confirmed that the tourmaline also has electrical properties called "permanent electrode" in addition to the foregoing ones. In case of Schorltourmaline, the permanent electrode of the tourmaline has a voltage of 5.34V at an interelectrode distance of 20 mm, but the interelectrode voltage thereof can further be increased due to the principle of the solid state physics if the interelectrode distance of the crystal bodies is reduced. For instance, an electrostatic voltage of 1,000,000 V can be obtained if the distance is reduced to 0.3 µm.

There have been done a variety of studies in which a small amount of water is electrolyzed by bringing innumerable electrodes provided by tourmaline powder into contact with molecules of water in water and in the atmosphere to thus form surface active materials, while making use of the foregoing characteristics of tourmaline. Moreover, tourmaline powder possessing such characteristic properties has widely been used in various fields. For instance, hygienic cloths are produced from fibers in which fine crystals of tourmaline are incorporated; a sheet material to which tourmaline powder is applied together with a binder is used as a washing cloth serving as an auxiliary washing unit; or fine crystals thereof are mixed with a dielectric ceramic material and then fired to give a particulate substance which is used in a water-activator.

However, tourmaline suffers from a problem in that it is limited in the fields of applications since it is, by nature, a material insoluble in a liquid and should accordingly be utilized as a powdery raw material. For instance, it would be expected that tourmaline can provide various advantages because of its surface active effect when it is used in paints and varnishes and cosmetics, but tourmaline in the form of powder cannot satisfy diversified requirements for commercialization.

For this reason there have been conducted a variety of attempts to convert tourmaline powder into a gel in order to expand the area of application. Conventionally, an ore such as tourmaline, igneous rock, sedimentary rock or the like has been converted into a gel by first introducing the finely pulverized ore into a 5% by weight sulfuric acid aqueous solution (pH 0.2) along with additives, followed by stirring the mixture for several hours, addition of an agglutinant to thus form precipitates, discarding the supernatant, neutralization of the resulting residue to give a jelly-like product. However, the conventional method for preparing a mineral gel suffers from a problem in that the foregoing characteristics peculiar to each ore may be reduced or deteriorated since an acid solution having a high concentration is used as an aqueous medium for the gel-formation and the mineral components are extracted from the ore within a relatively short time period.

On the other hand, when tourmaline is used in its powdery state, smaller crystalline bodies should be formed to increase the interelectrode voltage and to thus achieve a higher ability to electrolyze water. Moreover, tourmaline is desirably formed into powder having a size as small as possible when tourmaline powder is incorporated into fibers, but the conventional method for preparing fine powder of an ore including tourmaline is a mechanical one using a pulverizer and accordingly, it has been very difficult to obtain particles having a particle size of less than 0.2 µm from the technical and economical standpoints. For this reason, the method for preparing electrostatically chargeable rayon fibers disclosed in Japanese Un-Examined Patent Publication (hereinafter referred to as "J.P. KOKAI") No. Hei 4-327207 makes use of ultrafine particulate electrets having an average particle size of 0.5 µm and the method for preparing fibers carrying achroite fine powder-containing permanent electrodes disclosed in J.P. KOKAI No. Hei 6-228808 employs fine powder of tourmaline crystals having an average particle size ranging from 1.0 to 0.3 µm.

### DISCLOSURE OF THE INVENTION

An object of the present invention is to provide a method for preparing a gel containing fine particles, which permits the preparation of a gel considerably easily as compared with the conventional mechanical pulverization method, while holding the characteristic properties peculiar to each ore.

Another object of the present invention is to provide a method for preparing fine powder of a mineral starting from the foregoing fine particles-containing gel and, in particular, to provide a method for easily reduce the particle size of a tourmaline ore while maintaining the characteristic properties perculiar to the ore.

The present invention provides a method for preparing a mineral gel which comprises the steps of immersing ore powder in an acidic water for at least 6 hours; then adding a gelling-stabilizing agent, a water release-inhibitory and stabilizing agent and a dispersant to the mixture to form a gel; and neutralizing the resultant gel. The present invention also provide a method for preparing a mineral gel which comprises the steps of immersing ore powder in an acidic water for at least 6 hours; then adding a humectant, a water release-inhibitory and stabilizing agent and a dispersant to the mixture to form a jelly-like product; and neutralizing the resulting product.

The present invention further provides a method for preparing mineral fine powder which comprises the steps of dehydrating the mineral gel prepared by the foregoing method; drying the dehydrated gel and then pulverizing it.

### BEST MODE FOR CARRYING OUT THE INVENTION

The present invention will hereinafter be described in more detail.

Ores to which the method of the present invention can suitably be applied are not restricted to specific ones, but particularly preferred are, for instance, igneous rock, raw ores for jewels such as Diamond, Sapphire, Ruby, Emerald, Tourmaline, Imperialtopaz, Garnet, Opal, Amethyst or Sedimentary rock. When the method of the present invention is applied to these ores, it is desirable to previously subject raw ore powder to mechanical pulverization to thus reduce the particle size thereof to, for instance, not more than 400 µm, preferably not more than 50 µm, more preferably not more than about 6 µm and, if necessary, more preferably not more than about 2 µm.

Water used in the preparation of the acidic water used in the invention may be usual water, but the water preferably has a purity as high as possible depending on purposes. Desirably used are those having low contents of, in particular, inorganic cations (in particular, iron and aluminum ions) and anions (in particular, chloride ions), preferably those having a content of these ions of not more than 100 ppb, and more preferably not more than 10 ppb. This is because if the content of these ions present in the water used for preparing the acidic water increases, colloidal particles present in the resulting mineral gel are liable to easily cause agglomeration.

Accordingly, purified water obtained by deionization or distillation is preferred as the water used in the preparation of the acidic water used in the invention.

The use of purified water having a low content of inorganic ions would permit the improvement of welling ability of he ore powder and the reduction of he time required for the preparation of desired gel.

Acids used in the preparation of the acidic water may be either organic acids (such as citric acid, malic acid, maleic acid, malonic acid, acetic acid, formic acid) or inorganic acids (such as sulfuric acid, hydrochloric acid, nitric acid), but preferred are, for instance, organic acids such as citric acid, malic acid, maleic acid, malonic acid.

It is desirable to adjust the pH value of the acidic water to the range of preferably from 1 to 4 and more preferably from 2 to 3.

The ore powder mechanically pulverized to a desired particle size (1 to 10 parts by weight) is immersed in 50 parts by weight of an acidic water, followed by leaving it to stand at 0 to 100 °C for at least 6 hours and usually for 20 to 30 hours. In this respect, the mixture may be allowed to stand, stirred or shaken.

Then a gelling-stabilizing agent, a water release-inhibitory and stabilizing agent and a dispersant are added to the mixture to thus cause gelation, followed by neutralization thereof. The amount of the gelling-stabilizing agent to be added preferably ranges from 0.01 to 1% by weight and more preferably 0.1 to 0.5% by weight based on the total weight of the mixture. Moreover that of the water release-inhibitory and stabilizing agent to be added preferably ranges from 0.01 to 0.2% by weight and more preferably 0.05 to 0.1% by weight based on the total weight of the mixture. In addition, that of the dispersant to be added preferably ranges from 1 to 10% by weight and more preferably 2 to 4% by weight based on the total weight of the mixture.

Examples of gelling-stabilizing agents are synthetic alkaline earth metal silicates (such as magnesium salts, calcium salts), glycosides derived from plants such as saponin, polyacrylamides, polyacrylic acid salts (such as sodium salt, potassium salt) and naturally-occurring gums. Any disintegration of the resulting gel due to the water release can be prevented over a long time period by the addition of a gelling-stabilizing agent.

Examples of water release-inhibitory and stabilizing agents are xanthan gum, locust bean gum, guar gum, alginic acid, polysaccharides such as glucomannan, starches and celluloses. The water release-inhibitory and stabilizing agent has an effect of preventing any water release from the resulting liquid.

Examples of dispersants are surface active agents, in particular, non-ionic surface active agents, for instance, polyalkylene glycol surface active agents such as polyethylene glycol and polypropylene glycol, among others. Among these, preferred are polyalkylene glycol surface active agents such as polyethylene glycol and polypropylene glycol having a molecular weight ranging from 400 to 1200. The dispersant serves to uniformly disperse mineral particles in the resulting gel.

If pulverized ore powder is immersed in an acidic water and allowed to stand, mineral components are extracted from the powder and this is accompanied by an increase in the pH value of the acidic water and finally leads to an alkaline pH. The resulting alkaline liquid is neutralized to give a mineral gel according to the present invention. The neutralizing agent used herein is not restricted to a particular one, but usable herein are acidic substances, for instance, organic acids (such as citric acid, malic acid, maleic acid, malonic acid, acetic acid, formic acid) and inorganic acids (such as sulfuric acid, hydrochloric acid, nitric acid). The neutralizing agent is used in an amount required for adjusting the pH of the mixture to a neutral one, and preferably to a level ranging from 6.5 to 7.0.

The use of the gelling-stabilizing agent in combination with a humectant permits the formation of a jelly-like mineral gel which can stably hold greater amount of water therein. Examples of such humectants are urea, plant's extracts (such as aloe extract (glycyrrhizin), a gourd extract), hyaluronic acid, chondroitin sulfuric acid. The amount of the humectant to be added preferably ranges from 0.01 to 0.2% by weight and more preferably 0.05 to 0.1% by weight based on the total weight of the mixture comprising the ore powder and the acidic water.

In another embodiment of the present invention, a mixture obtained by immersing ore powder in an acidic water for at least 6 hours is concentrated and then a gelling-stabilizing agent, a humectant, a water release-inhibitory and stabilizing agent, a dispersant or the like to the concentrate to thus cause gelation, followed by neutralization of the resulting product to give a mineral gel. The concentration procedure is carried out in such a manner that the concentration of the solid content (usually 5 to 10% by weight) reaches about 20 to 50% by weight. The concentration procedure may be carried out by, for instance, evaporation of he moisture at ordinary temperature or under heating at ordinary pressure or a reduced pressure; decantation; filtration; or centrifugation. After the concentration of the solid content reaches about 20 to 50% by weight, the resulting concentrate is converted into a gel by the addition of, for instance, a gelling-stabilizing agent, if necessary, with stirring.

It is also possible to prepare a mineral gel by previously admixing an additive such as a water release-inhibitory and stabilizing agent, a dispersant, a gelling-stabilizing agent or a humectant with the ore powder, then immersing the mixture in an acidic water for at least 6 hours and neutralizing the mixture. However, it is rather preferred to add an additive such as a water release-inhibitory and stabilizing agent, a dispersant, a gelling-stabilizing agent or a humectant, after the ore powder is previously immersed in an acidic water to thus sufficiently extract the mineral component therefrom and the pH value of the liquid is stabilized.

The mineral gel prepared by the foregoing methods can be dehydrated, dried and pulverized to prepare mineral fine powder. The dehydration and drying of the mineral gel can be performed by the usual means, for instance, means for solid-liquid separation such as decantation, centrifugation, press filtration; or evaporation of moisture at ordinary temperature or under heating at ordinary pressure or a reduced pressure. In this respect, if tourmaline is used as the raw ore, the heating. temperature is preferably not more than 950°C and more preferably not more than 600°C to prevent any change in the physical properties of tourmaline. The gel thus dried is pulverized using a pulverizer (such as a ball mill type pulverizer). The particle size of the raw ore is generally reduced to about 1/10∼100 by the processes for preparing the mineral gel, for dehydration, for drying and for pulverization Therefore, fine particles having a particle size, for instance, ranging from 1 to 2 µm and even more finer particles having a particle size ranging from about 0.5 to 0.05 µm can easily be prepared by repeating the same treatment over 2 to 3 times using, as a raw material, the resulting mineral gel which has been, for instance, dehydrated and dried.

In the present invention, a dilute acid solution is used for the gelation and the mineral components are extracted over a long period of time and accordingly, the present invention permits the preparation of a mineral gel without causing any change or deterioration of the foregoing physical properties peculiar to each starting ore. When using tourmaline ore as a raw ore, the resulting mineral gel possesses electrical properties peculiar to the tourmaline and comprises tourmaline particles stably dispersed therein. This accordingly results in the improvement of the gel in the polarization potential and the reduction of the production cost. Unless tourmaline particles are stably dispersed in the gel, i.e., when tourmaline particles are agglomerated and solidified or unevenly distributed in the system, the resulting gel has a reduced polarization potential and cannot show the characteristic properties peculiar to the tourmaline.

Moreover, if the gelled tourmaline is heated at, for instance, 600°C for 30 minutes to remove moisture, the organic substances can be removed in addition to fine pulverization during the gel production step, and this permits the production of fine tourmaline powder whose particle size is uniform and reduced to about 70% (0.7 to 1.4 µm) of the initially pulverized particle size (1 to 2 µm) (i.e., highly pure fine tourmaline powder having a low content of organic substances (usually about 1.4 to 1.5% by weight)).

For instance, the tourmaline mineral gel prepared according to the method of the present invention using tourmaline powder which has mechanically been ground to a particle size of not more than 6 µm can provide fine tourmaline powder having a particle size of not more than 0.2 µm by only a single treatment, if the mineral gel is heated to a temperature of not more than 950°C, for instance, 600 °C for 30 minutes to remove the moisture therefrom. Moreover, fine powder having a particle size ranging from 0.1 to 0.06 µm can be produced by preparing a tourmaline mineral gel according to the method of the invention starting from tourmaline powder having a particle size of 0.2 µm, removing the moisture present in the mineral gel and repeating this cycle (i.e., gel-production and moisture removal steps) over three times. Alternatively, the mineral gel or mineral fine powder may likewise be treated with ultrasonic waves having a frequency ranging from 30 to 80kHz and preferably 40 to 70kHz to make the particles more finer (particle size: 0.1 to 0.06 µm).

As has been described above, the tourmaline gel permits the dispersion of tourmaline particles therein through the gelation of tourmaline ore powder and the enhancement of the voltage as determined by calculating the electrostatic voltage based on the solid state physics, through the conversion thereof into fine particles, but there has also been known an alternative method for preparing a tourmaline gel which comprises mixing tourmaline ore powder with powder of, for instance, a silicate ore (particle size: 1 to 2 µm) and then immersing the mixture in an acid solution so that the foregoing dispersibility can be maintained even after removing the moisture to give powder of a solid material. Examples of such silicate ores include Zeolite, Mica, Chrysolite, Amphibole, Feldspar, Pyroxene and Obsidian. In this respect, the silicate ore is suitably used in an amount ranging from 10 to 20 parts by weight per 100 parts by weight of the tourmaline ore powder.

The gelling-stabilizing agent, water release-inhibitory and stabilizing agent, dispersant and humectant used for forming a jelly or a gel may appropriately be selected and used depending on physical properties (particle size, pH, electrical properties) of the ore used. If the mineral gel produced is stored over a long time period, a preservative (such as paraben and benzoic acid) may, if necessary, be used in an amount ranging from 0.05 to 0.1 part by weight per 100 parts by weight of the mineral gel. The preservative may be added to the gel prior to, during or after the production thereof.

In addition, the gel may be prepared while adding an agglutinant such as silica or alumina to the ore powder in an amount ranging from 0.05 to 0.1 part by weight per 100 parts by weight of the latter.

The present invention will hereinafter be described in more detail with reference to the following Examples.

### Example 1

To 40 g of a powdery naturally-occurring tourmaline ore (mechanically pulverized to an average particle size of 351 mesh (42 µm)), there was added 1,000 ml of demineralized water followed by addition of 5 g of citric acid to adjust the pH to 2 to 3. After allowing the mixture to stand at room temperature for 20 hours, there were added, to the mixture, 40 g of a gelling-stabilizing agent (magnesium silicate), 2 g of a water release-inhibitory and stabilizing agent (polysaccharide) and 140 ml of a dispersant (propylene glycol), followed by mixing with stirring. At this stage, the pH of the mixture was found to be 8.5. Then the pH of the mixture was adjusted to 6.5 to 7 by the addition of 12 ml of a 25% by weight aqueous citric acid solution to thus prepare a mineral gel (1200 g).

The gel was observed by a laser diffraction type size distribution-determining device and as a result, the average particle size of the particles present in the gel was found to be 0.5 µm.

### Example 2

To 40 g of a powdery naturally-occurring tourmaline ore (mechanically pulverized to an average particle size of 2 µm)), there was added 1,000 ml of demineralized water followed by addition of 5 g of citric acid to adjust the pH to 2 to 3. After allowing the mixture to stand at room temperature for 20 hours, there were added, to the mixture, 40 g of a gelling-stabilizing agent (magnesium silicate), 2 g of a water release-inhibitory and stabilizing agent (polysaccharide) and 140 ml of a dispersant (propylene glycol), followed by mixing with stirring. At this stage, the pH of the mixture was found to be 8.5. Then the pH of the mixture was adjusted to the range of from 6.5 to 7 by the addition of 12 ml of a 25% by weight aqueous citric acid solution to thus prepare a mineral gel (1200 g).

The gel was observed by a laser diffraction type size distribution-determining device and as a result, the average particle size of the particles present in the gel was found to be 0.06 µm.

### Example 3

The same procedures used in Example 1 were repeated except that 10 g of naturally-occurring tourmaline fine particles (average particle size: about 6.1 µm) was used to prepare a mineral gel (1150 g) containing tourmaline fine particles (average particle size: about 0.1 µm).

### Example 4

The same procedures used in Example 1 were repeated except for using naturally-occurring tourmaline ore powder mechanically pulverized into powder having an average particle size of 10 µm to give gelled tourmaline fine particles (particle size: 1 to 2 µm; average particle size: 1.5 µm), followed by dispensing 10 g of the particles in a porcelain dish and heating them in a muffle furnace at 600°C for 30 minutes. The particle size of the tourmaline fine particles thus heat-treated was found to be 0.7 to 1.4 µm (average particle size: 0.9 µm).

### Example 5

Gelled tourmaline fine particles (10 g; average particle size: about 6 µm) were dispensed in a porcelain dish and heated in a muffle furnace at 600 °C for 30 minutes. The average particle size of the tourmaline fine particles thus heat-treated was found to be 0.2 µm.

### Example 6

The same procedures used in Example 1 were repeated except that 10 g of naturally-occurring tourmaline fine particles (average particle size: about 6.1 µm) was used to prepare a mineral gel (1150 g) containing tourmaline fine particles (average particle size: about 0.1 µm).

### Example 7

To 50 g of naturally-occurring tourmaline fine particles (average particle size of 42 µm), there was added 1,000 ml of demineralized water, followed by addition of 5 g of citric acid to adjust the pH to 2 to 3. The mixture was allowed to stand at room temperature for 20 hours. There were added, to the mixture, 4 g of a humectant (urea), 40 g of a gelling-stabilizing agent (calcium silicate), 3 g of a water release-inhibitory and stabilizing agent (polysaccharide) and 60 ml of a dispersant (propylene glycol), followed by mixing with stirring and neutralization of the mixture by addition of 13 ml of a 30% by weight aqueous solution of malic acid to give a jelly-like mineral gel (1140 g).

### INDUSTRIAL APPLICABILITY

The field of applications of the mineral gel, mineral jelly and fine powder produced by the method of the present invention are not limited to particular ones, and they may be used in, for instance, construction materials; base materials for cosmetics, medicaments and quasi-drugs; gloss agents; paints and varnishes; and fertilizers. More specifically, the fields of applications of these products include, for instance, cement and wall materials which are mixed with 10 to 20% by weight of the fine powder; wall paper in which 5 to 7% by weight of the mineral jelly was kneaded; fundamental cosmetics (such as toilet water for cleansing, milky lotions, creams for pack) which are blended with about 5% by weight of the fine powder; medicines for the stomach and bowels and drugs for controlling intestinal functions in which 0.5% by weight of ultrafine powder is incorporated; cataplasms in which 10 to 15% by weight of the mineral gel is incorporated; gloss agents and anti-sagging agents which are mixed with 2 to 3% by weight of the mineral jelly; paints and varnishes (such as those for interior and ship bottoms) which are mixed with about 3 to 10% by weight of the fine powder; and fertilizers (in particular, potassium fertilizers) to which about 5% by weight of the fine powder is added.

As has been explained above, in the method for preparing a mineral gel according to the present invention, a dilute acid solution is used for the gelation and the mineral components are extracted over a long period of time and accordingly the present invention permits the preparation of a mineral gel, a mineral jelly and fine powder without causing any change or deterioration of the foregoing physical properties peculiar to each starting ore.

## Claims

1. A method for preparing a mineral gel comprising the steps of immersing ore powder in an acidic water for at least 6 hours; then adding a gelling-stabilizing agent, a water release-inhibitory and stabilizing agent and a dispersant to the mixture to form a gel; and neutralizing the resulting gel.

2. The method of claim 1 wherein the initial pH of the acidic water ranges from 2 to 3.

3. The method of claim 1 or 2 wherein 1 to 10 parts by weight of the ore powder is immersed in 50 parts by weight of the acidic water to give a mixture, then 0.01 to 1% by weight of the gelling-stabilizing agent, 0.01 to 0.2% by weight of the water release-inhibitory and stabilizing agent and 1 to 10% by weight of the dispersant, based on the total weight of the mixture, are added thereto to form a gel and then the pH of the gel is adjusted to 6.5 to 7.0 by neutralization.

4. The method as set forth in any one of claims 1 to 3 wherein the mixture obtained by immersing the ore powder in the acidic water for at least 6 hours is concentrated, then the gelling-stabilizing agent, the water release-inhibitory and stabilizing agent and the dispersant are added to the concentrate to form a gel and the gel is neutralized.

5. A method for preparing a mineral gel comprising the steps of immersing ore powder in an acidic water for at least 6 hours; then adding a humectant, a water release-inhibitory and stabilizing agent and a dispersant to the mixture to give a jelly; and neutralizing the jelly.

6. The method of claim 5 wherein the initial pH of the acidic water ranges from 2 to 3.

7. The method of claim 5 or 6 wherein 1 to 10 parts by weight of the ore powder is immersed in 50 parts by weight of the acidic water to give a mixture, then 0.01 to 0.2% by weight of the humectant, 0.01 to 0.2% by weight of the water release-inhibitory and stabilizing agent and 1 to 10% by weight of the dispersant, based on the total weight of the mixture, are added thereto to form a gel and then the pH of the gel is adjusted to 6.5 to 7.0 by neutralization.

8. The method as set forth in any one of claims 1 to 7 wherein purified water is used for the production of the acidic water.

9. A method for preparing mineral fine powder comprising the steps of dehydrating the mineral gel prepared by a method as set forth in any one of claims 1 to 8; drying the dehydrated gel and then pulverizing it.

10. The method as set forth in any one of claims 1 to 9 wherein the raw ore is a tourmaline ore.
